# EUROPÄISCHE PATENTSCHRIFT

(11) **EP 0 240 793 B1**
(45) Veröffentlichungstag und Bekanntmachung des Hinweises auf die Patenterteilung: **20.01.1993**
(21) Anmeldenummer: 87103949.1
(22) Anmeldetag: 18.03.1987
(51) Int. Cl.: F26B 7/00, F26B 23/00, B01D 5/00

(54) **Kondensationsverfahren für unter Unterdruck stehenden Wasserdampf**
Condensation process for hypoboric water vapour
Procédé de condensation pour vapeur d'eau hypoborique

(30) Priorität: 08.04.1986 DE 3611773
(43) Veröffentlichungstag der Anmeldung: 14.10.1987
(73) Patentinhaber: Eichholz, Heinz, D-48480 Schapen (DE)
(72) Erfinder: Eichholz, Heinz, D-48480 Schapen (DE)
(74) Vertreter: Schulze Horn, Stefan, Dipl.-Ing. M.Sc.

(56) Entgegenhaltungen:
- WO-A-83/00547
- DE-A- 2 821 259
- DE-C- 891 979
- FR-A- 1 161 753

## Beschreibung

Die Erfindung betrifft ein Vakuumtrocknungsverfahren für zu trocknendes, Wasser enthaltendes Gut, sowie eine Vorrichtung zur Durchführung des Verfahrens, gemäß dem Oberbegriff des Patentanspruchs 1 und dem Oberbegriff des Patentanspruchs 4.

Ein Verfahren und eine Vorrichtung der genannten Art sind aus DE-A-28 21 259 bekannt, wobei auch hier eine Flüssigkeitsring-Vakuumpumpe verwendet wird, um eine möglichst günstige Wärmeenergiebilanz des Trocknungsverfahrens zu erreichen. Als nachteilig wird bei diesem bekannten Verfahren angesehen, daß die im Bereich der Pumpe und des Pumpenantriebes, üblicherweise ein Elektromotor, im Betrieb anfallende, insbesondere an die Umgebungsluft abgegebene Wärmeenergie ungenutzt bleibt.

Es stellt sich daher die Aufgabe, ein Verfahren und eine Vorrichtung der eingangs genannten Art anzugeben, die den angegebenen Nachteil vermeiden und die eine verbesserte Wärmeenergiebilanz aufweisen.

Die Lösung des ersten Teils der Aufgabe erlingt erfindungsgemäß durch ein Verfahren der eingangs genannten Art mit den kennzeichnenden Merkmalen des Patentanspruchs 1.

Vorteilhaft wird mit dem neuen Verfahren durch die zusätzliche Ausnutzung der Abwärme der Pumpe und ihres Antriebes die Wärmeenergiebilanz besonders günstig, wobei nur ein relativ geringer technischer Aufwand für diese Verbesserung erforderlich ist.

Weiterbildungen des erfindungsgemäßen Verfahrens sind in den Patentansprüchen 2 und 3 angegeben.

Die Lösung des zweiten Teiles der Aufgabe gelingt erfindungsgemäß durch eine Vorrichtung der eingangs genannten Art mit den kennzeichnenden Merkmalen des Patentanspruchs 4. Diese Vorrichtung erfordert einen relativ geringen technischen Aufwand und gewährleistet wegen ihrer Einfachheit eine zuverlässige Funktion bei zugleich sehr günstiger Wärmeenergiebilanz.

Weitere bevorzugte Ausgestaltungen und Merkmale der Vorrichtung gehen aus den Vorrichtungsansprüchen 5 bis 10 hervor.

Im folgenden werden das Verfahren sowie die Vorrichtung anhand einer Zeichnung näher erläutert. Die Figuren der Zeichnung zeigen im einzelnen:
- Figur 1: eine Vakuum-Trocknungsvorrichtung in schematischer Darstellung,
- Figur 2: die Vorrichtung in einer zweiten Ausgestaltung, ebenfalls in schematischer Darstellung und
- Figur 3: die Vorrichtung in einer dritten Ausführungsform.

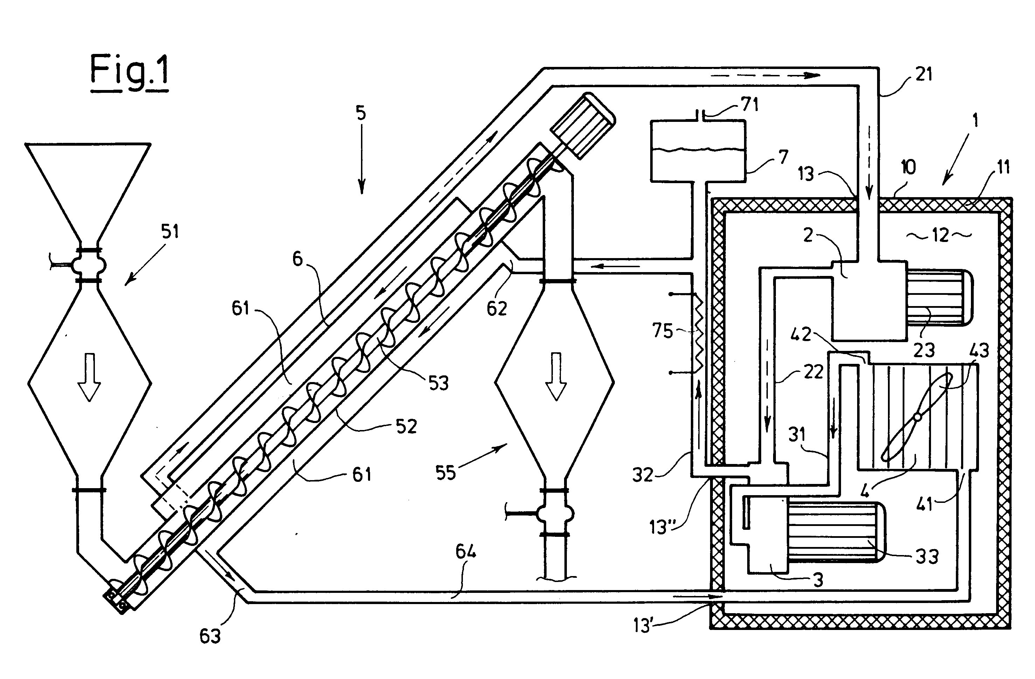

Wie aus der Figur 1 ersichtlich ist, besteht das dargestellte Ausführungsbeispiel aus einer Vakuum-Trocknungsvorrichtung 5 mit einer Pumpenanordnung 1, im wesentlichen bestehend aus einer ersten Vakuumpumpe 2, einer Wasserring-Vakuumpumpe 3 als zweiter Vakuumpumpe und einem Wärmetauscher 4. Ansaugseitig weist die erste Vakuumpumpe 2, vorzugsweise eine Drehschieber-Vakuumpumpe oder eine Gasring-Vakuumpumpe, eine mittels der Pumpen 2 und 3 unter Vakuum setzbare Dampfzuführleitung 21 auf. Auspuffseitig schließt sich an die Vakuumpumpe 2 eine Dampfzwischenleitung 22 an, welche an die Ansaugseite der Wasserring-Vakuumpumpe 3 angeschlossen ist, und in welcher ein Vorvakuum herrscht. Die Wasserring-Vakuumpumpe 3 ist wasserdurchströmt und verfügt deshalb über eine Wasserzuführleitung 31 sowie eine Wasserabführleitung 33. Angetrieben werden die Pumpen 2 und 3 jeweils von einem Antriebsmotor 23 bzw. 33, die vorzugsweise Elektromotoren sind. Zur Ausnutzung der Antriebs-Abwärme dient der Wärmetauscher 4, welcher mittels eines Zulaufs 41 und eines Ablaufs 42 in die Wasserzuführleitung 31 eingeschaltet ist. Die beiden Pumpen 2 und 3 sowie der Wärmetauscher 4 befinden sich innerhalb eines geschlossenen Gehäuses 10 mit einer Wärmeisolierung 11 sowie Leitungsdurchführungen 13, 13' und 13". Hierdurch werden Wärmeverluste nach außen weitestgehend vermieden. Die im Inneren 12 des Gehäuses 10 befindliche erwärmte Luft wird im dargestellten Ausführungsbeispiel mittels eines Ventilators 43 durch den Wärmetauscher 4 befördert. Dabei kann auch ein einzelner Ventilator bei entsprechender Anordnung sowohl für die Motoren 23 und 33 als auch für den Wärmetauscher 4 die erforderliche Luftbewegung erzeugen.

Die Funktion der Pumpenanordnung 1 ist wie folgt:
Wasser relativ niedriger Temperatur gelangt in den Wärmetauscher 4 und wird dort durch von den Pumpen 2 und 3 und deren Antrieben erzeugte Warmluft vorgewärmt. Durch die Wasserzuführleitung 31 gelangt das vorgewärmte Wasser zur Wasserring-Vakuumpumpe 3. Durch die unter einem hohen Vakuum stehende Dampfzuführleitung 21 gelangt Wärmeenergie enthaltender Wasserdampf sehr niedrigen Druckes zur Vakuumpumpe 2 und von dieser unter geringfügig höherem Druck durch die Dampfzwischenleitung 22 ebenfalls zur Wasserring-Vakuumpumpe 3. In dieser wird der Wasserdampf in das die Pumpe durchströmende Wasser kondensiert, wobei die im Dampf enthaltende Wärmeenergie sowie die anfallende Kondensationswärme in das Wasser übergehen. Das so erwärmte Wasser verläßt die Wasserring-Vakuumpumpe 3 über die Wasserabführleitung 32 und steht für Erwärmungs- oder Heizzwecke zur Verfügung.

Zur Vorheizung in der Startphase der Vorrichtung sowie zur Unterstützung bei ungenügender Wärmeabgabe ist in die Leitung 32 eine Vor- und Zusatzheizvorrichtung 75, beispielsweise eine elektrisch betriebene Heizwendel, eingebaut. An der höchsten Stelle der Wasserabführleitung 32 ist zusätzlich noch ein Ausgleichsgefäß 7 mit einer Entlüftung 71 vorgesehen. Außer wie im Ausführungsbeispiel dargestellt, können die Heizvorrichtung 75 und das Ausgleichsgefäß 7 auch im Inneren 12 des Gehäuses 10 angeordnet sein.

Eine besonders günstige Wärmeenergiebilanz der Vorrichtung ergibt sich insbesondere deshalb, weil sowohl der Wasserdampf aus der Trocknungsvorrichtung 5 entnommen als auch das erwärmte Wasser in dieser sinnvoll verwendet werden kann. Die Vakuum-Trocknungsvorrichtung 5, mit welcher beispielsweise Kunststoff-Granulat getrocknet werden kann, besteht im wesentlichen aus einem Aufgabeteil 51, einem Förderrohr 52 mit einer darin rotierenden, motorbetriebenen Schnecke 53 sowie einem Entnahmeteil 55 zur chargenweisen Trocknung eines schüttfähigen Gutes, wie des genannten Granulats. Der Aufgabeteil 51 besteht aus einem Aufgabetrichter, einem Absperrventil und einem Vorratsbehälter, der Entnahmeteil entsprechend aus einem Sammelbehälter und einem darunter angeordneten Absperrventil mit anschließendem Abführrohr. Nach Befüllung des Vorratsbehälters und Schließen der beiden Absperrventile wird das zu trocknende Gut mittels der Schnecke kontinuierlich durch das Förderrohr in den entnahmeseitigen Sammelbehälter gefördert, wobei über die Leitung 21 mittels der Pumpenanordnung 1 innerhalb des Förderrohres 52 ein die Feuchtigkeit im zu trocknenden Gut zur Verdampfung bringendes Vakuum erzeugt wird. Auf seiner Außenseite ist das Förderrohr 52 von einem Heizmantel 6 umgeben, der von warmem Wasser durchströmt wird. Dieses warme Wasser kommt von der Pumpenanordnung 1 und gelangt über die Wasserabführleitung 32 und einen Zulauf 62 in den Wasserraum 61 des Heizmantels 6, der vorzugsweise mit einer Wärmeisolierung an seiner Außenseite versehen ist. Sinnvollerweise wird hierbei das Wasser im Gegenstrom zu dem zu trocknenden Gut geführt. Über einen Auslaß 63 und eine Rückführleitung 64 gelangt das abgekühlte Wasser wieder zur Wasserzuführleitung 31 und damit zur Pumpenanordnung 1, um dort erneut erwärmt zu werden.

Mit der beschriebenen Vorrichtung wird eine sehr günstige Energiebilanz erreicht, denn es wird sowohl die mit dem Dampf aus dem zu trocknenden Gut abgeführte Wärme sowie die Kondensationswärme des Dampfes als auch die Verlustwärme der Pumpenmotoren weitestgehend zurückgewonnen. Wärmeverluste an die Umgebung treten nur noch in einem sehr geringen Maße auf. Die Zusatzheizung 75 wird nur im Startbetrieb sowie bei besonders hohem Wärmebedarf betrieben.

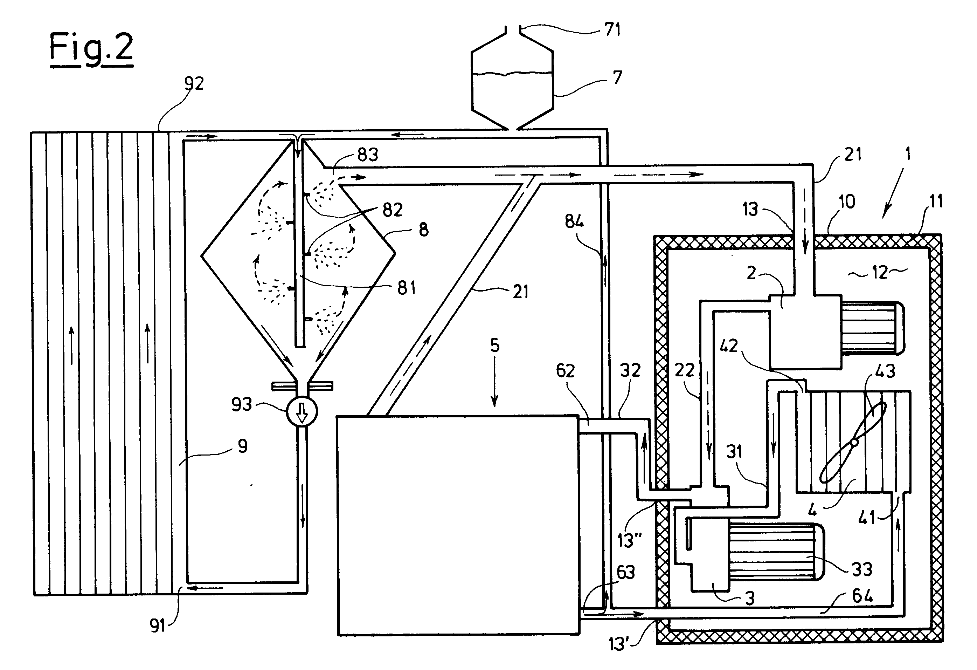

Ein zweites Beispiel des erfindungsgemäßen Verfahrens bzw. der zugehörigen Vorrichtung soll anhand der Figur 2 beschrieben werden. Die Pumpenanordnung 1 und die Trocknungsvorrichtung 5 entsprechen hier der in Figur 1 dargestellten Ausführung und brauchen deshalb nicht näher erläutert zu werden. Der Unterschied zur Figur 1 besteht in einer Ergänzung der Vorrichtung. Bei dem Anwendungsbeispiel in Figur 1 wurde der Wasserdampf aus dem zu trocknenden Gut entnommen und das erwärmte Wasser zur Erwärmung des zu trocknenden Gutes verwendet. Der Dampf stammt dort also allein aus dem Feuchtegehalt des von außen aufgegebenen, zu trocknenden Gutes.

Bei dem Anwendungsbeispiel in Figur 2 handelt es sich dagegen um ein erweitertes System. Zusätzlicher Wasserdampf wird hier innerhalb einer Vakuumsprühkammer 8 durch Versprühen von Wasser mittels eines mit Sprühdüsen 82 versehenen Sprührohres 81 erzeugt. Der Dampf gelangt durch einen Auslaß 83 von der Sprühkammer 8 über die Dampfzuführleitung 21 zur Pumpenanordnung 1. In dieser wird in bekannter Weise die in dem Dampf enthaltende Wärmeenergie sowie die Abwärme der Pumpenmotoren dem durch die Wasserring-Vakuumpumpe 3 strömenden Wasser zugeführt. Das so erwärmte Wasser gelangt durch die Wasserabführleitung 32 über den Vorlauf 62 zu der hier nur als Kasten angedeuteten, zuvor beschriebenen Trocknungsvorrichtung. Dort gibt das Wasser seine Wärme zu Heizzwecken ab und gelangt abgekühlt durch den Rücklauf 63 und die Wasserrücklaufleitung 64 wieder zur Pumpenanordnung 1 und dort durch den Wärmetauscher 4 zur Wasserring-Vakuumpumpe 3.

Von dem Rücklauf 63 zweigt eine Wasserabzweigleitung 84 ab, die zum Sprührohr 81 in der Sprühkammer 8 führt. Durch diese Leitung wird die verdampfte Menge des Wassers, die durch den Dampfauslaß 83 abgezogen wird, ersetzt. Gleichzeitig bildet die Sprühkammer 8 einen Teil eines zweiten Kreislaufes. Dieser Kreislauf besteht weiterhin aus einem Absorber 9, welcher über einen Zulauf 91, einen Ablauf 92 und eine Wasserpumpe 93 mit der Sprühkammer 8 verbunden ist. Die unterhalb der Kammer 8 angeordnete Pumpe 93 befördert das in der Kammer 8 nicht verdampfte, niedergeschlagene Wasser durch den Absorber 9, wo es unter Aufnahme von Umgebungs- oder Abwärme erwärmt wird. Aus dem Absorber 9 gelangt das Wasser erwärmt zusammen mit dem durch die Abzweigleitung 84 herangeführten Wasser in das Sprührohr 81, um in der Sprühkammer 8 versprüht zu werden. Hierdurch erhält der in der Kammer 8 erzeugte Wasserdampf einen vergleichsweise hohen Wärmeenergieinhalt, der in der Pumpenanordnung 1 in der beschriebenen Weise in für Heizzwecke nutzbare Wärmeenergie umgewandelt wird.

Anstelle oder ergänzend zu einer Erwärmung des Wassers vor dem Versprühen in der Kammer 8 kann auch eine Erwärmung des in der Kammer 8 erzeugten Wasserdampfes mittels eines Absorbers vorgesehen werden.

Auch bei diesem Ausführungsbeispiel ist an der höchsten Stelle des Wasserkreislaufes in der Wasserabzweigleitung 84 ein Ausgleichsgefäß 7 mit einer Entlüftung 71 vorgesehen.

Da bei dieser Anwendung der Vorrichtung auch ein geringeres Vakuum für die Funktion ausreichend ist, kann auf die Vakuumpumpe 2 verzichtet werden. Dies bedeutet, daß dann die Dampfzuführleitung 21 unmittelbar mit der Dampfzwischenleitung 22, d. h. mit der Wasserring-Vakuumpumpe 3 verbunden ist, wodurch eine besonders einfache und kostengünstige Ausführung der Vorrichtung zur Durchführung des Verfahrens gemäß Erfindung erreicht wird.

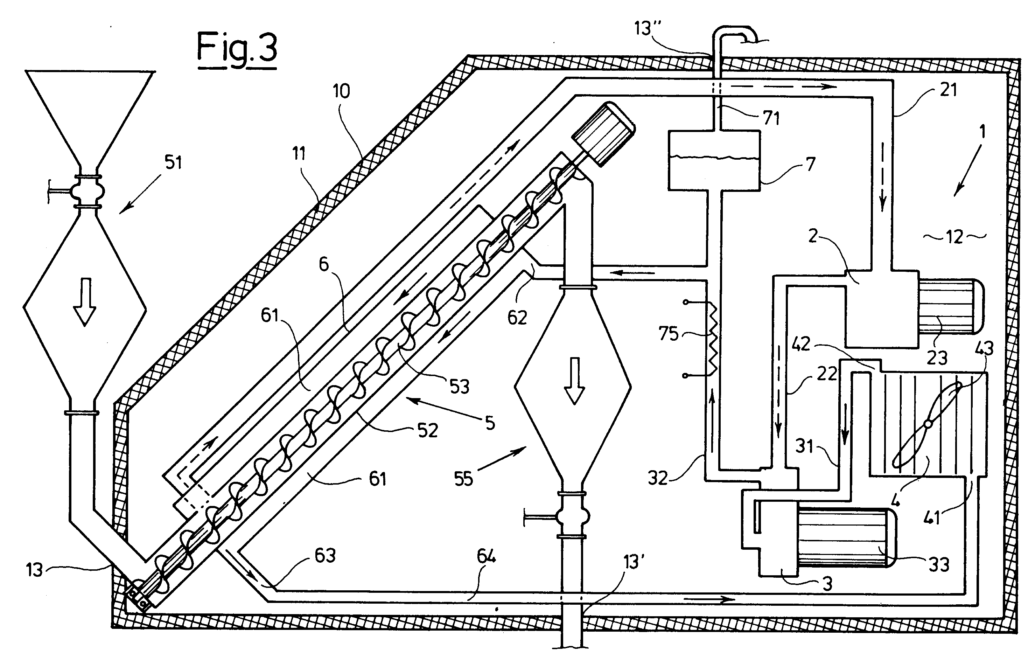

Figur 3 schließlich zeigt die Vorrichtung in einer dritten Ausführungsform. Neu ist bei dieser Ausführungsform im wesentlichen, daß das Isoliergehäuse 10, 11 nicht nur die Vakuumpumpen 2 und 3 und den Wärmetauscher 4, sondern auch, abgesehen von dem Aufgabeteil 51, die Vakuumtrocknungseinrichtung 5, das Ausdehnungsgefäß 7 und die Leitungen 21, 32 und 64 zwischen der Pumpenanordnung 1 und der Trocknungseinrichtung 5 umgibt. Hierdurch wird eine besonders gute Wärmebilanz erreicht. Praktische Versuche haben gezeigt, daß in der Leitung 32, die das Wasser von der Pumpenanordnung 1 zur Trocknungsvorrichtung 5 führt, Temperaturen von bis zu 90° C ohne zusätzliche Beheizung erreichbar sind.

In ihrer Funktionsweise entspricht die Vorrichtung in Figur 3 der Vorrichtung in Figur 1, weshalb sich eine Wiederholung an dieser Stelle erübrigt. Ebenso bezeichnen gleiche Bezugsziffern in den Figuren 1 und 3 gleiche Teile, so daß für deren Erläuterung auf die Beschreibung der Figur 1 verwiesen wird.

## Patentansprüche

1. Vakuumtrocknungsverfahren für zu trocknendes, Wasser enthaltendes Gut, wobei das Wasser aus dem Gut in Form von unter Unterdruck stehendem Wasserdampf abgeführt wird, wobei der Unterdruck durch eine Wasserring-Vakuumpumpe erzeugt und der Wasserdampf in das diese Pumpe durchströmende Wasser kondensiert wird und wobei das Wasser in einem Wasserkreislauf mit wenigstens einem Wärme aus dem Wasser an das zu trocknende Gut abgebenden Wärmetauscher geführt wird,
dadurch gekennzeichnet, daß das im Kreislauf geführte Wasser vor dem Einströmen in die Wasserring-Vakuumpumpe (3) durch einen Abwärme der Pumpe (3) und des Pumpenantriebes (33) an das Wasser übertragenden Wärmetauscher (4) geleitet wird.

2. Vakuumtrocknungsverfahren nach Anspruch 1, dadurch gekennzeichnet, daß die Wasserring-Vakuumpumpe (3) als Vorvakuumpumpe in Reihe mit einer vorgeschalteten Drehschieber- oder Gasring-Vakuumpumpe (2) betrieben wird.

3. Vakuumtrocknungsverfahren nach Anspruch 1 oder 2, dadurch gekennzeichnet, daß durch Versprühen von aus dem Wasserkreislauf der Wasserring-Vakuumpumpe (3) abgezweigtem Wasser in einer geschlossenen Vakuum-Sprühkammer (8) Wasserdampf erzeugt wird und daß das Wasser vor dem Versprühen und/oder der durch das Versprühen erzeugte Dampf durch einen Absorber (9) zur Aufnahme von Umgebungs- und/oder Abwärme geführt wird/werden.

4. Vorrichtung zur Durchführung des Verfahrens nach einem der Ansprüche 1 bis 3, mit einer chargenweise mit zu trocknendem, Wasser enthaltendem Gut beschickbaren Vakuumtrocknungskammer (5), mit einer wasserdurchströmten Wasserring-Vakuumpumpe (3) zur Erzeugung eines Unterdruckes in der Vakuumtrocknungskammer (5) und zum Abziehen des in dieser entstehenden Wasserdampfes sowie zum Kondensieren desselben in das die Wasserring-Vakuumpumpe (3) durchströmende Wasser und mit einem Wasserkreislauf für das die Wasserring-Vakuumpumpe (3) durchströmende Wasser, wobei in den Kreislauf wenigstens ein Wärme aus dem Wasser an das zu trocknende Gut abgebender Wärmetauscher (6) eingeschaltet ist,
dadurch gekennzeichnet, daß in den Wasserkreislauf vor der Wasserring-Vakuumpumpe (3) ein weiterer Wärmetauscher (4) eingeschaltet ist, in welchem das im Kreislauf geführte Wasser vor dem Einströmen in die Wasserring-Vakuumpumpe (3) durch Abwärme der Pumpe (3) und des Pumpenantriebes (33) erwärmbar ist, wobei die Pumpe (3), der Pumpenantrieb (33) und der Wärmetauscher (4) in einem gemeinsamen wärmeisolierten Gehäuse (10) angeordnet sind.

5. Vorrichtung nach Anspruch 4, dadurch gekennzeichnet, daß der Wasserring-Vakuumpumpe (3) eine Drehschieber- oder Gasring-Vakuumpumpe (2) als weitere Vakuumpumpe vorgeschaltet ist.

6. Vorrichtung nach Anspruch 4 oder 5, dadurch gekennzeichnet, daß in dem Wasserkreislauf hinter der Wasserring-Vakuumpumpe (3) eine Vor- und Zusatzheizeinrichtung (75) angeordnet ist.

7. Vorrichtung nach einem der Ansprüche 4 bis 6, dadurch gekennzeichnet, daß auch die Vakuum-Trocknungskammer (5) innerhalb des gemeinsamen wärmeisolierten Gehäuses (10) angeordnet ist.

8. Vorrichtung nach einem der Ansprüche 4 bis 7, dadurch gekennzeichnet, daß der weitere Wärmetauscher (4) ein Luft-Wasser-Wärmetauscher ist.

9. Vorrichtung nach einem der Ansprüche 4 bis 8, dadurch gekennzeichnet, daß die Vakuumtrockenkammer (5) ein Förderrohr (52) mit einer darin rotierenden Schnecke (53) umfaßt und daß der Wärme an das Gut abgebende Wärmetauscher (6) in Form eines Heizmantels das Förderrohr (52) umgibt.

10. Vorrichtung nach Anspruch 9, dadurch gekennzeichnet, daß das den Wärmetauscher (6) durchströmende Wasser im Gegenstrom zu dem durch das Förderrohr (52) geförderten Gut durch den Wärmetauscher (6) führbar ist.

## Claims

1. Vacuum drying process for materials containing water which are to be dried, whereby the water is drawn out of the material in the form of water vapour in a partial vacuum, whereby the negative pressure is generated by a water-ring vacuum pump and the water vapour is condensed into water flowing through this pump and whereby the water is contained in a water circuit fitted with at least one heat exchanger drawing warmth from the water and releasing this warmth to the material to be dried,
characterized in that
the water contained in the water circuit is fed through the heat exchanger (4) which tranfers waste heat from the pump (3) and the pump drive (33) to the water before it flows into the water-ring vacuum pump (3).

2. Vacuum drying process according to patent claim 1,
characterized in that
the water-ring vacuum pump (3) is operated as a fore-vacuum in series with a rotary valve or a gaseous ring vacuum pump (2).

3. Vacuum drying process according to claim 1 or 2,
characterized in that
by means of atomizing of water diverted from the water circuit of the water-ring vacuum pump (3) into a closed vacuum spray chamber (8), water vapour is produced and that, before atomizing, the water and/or the water vapour produced by atomizing is fed through an absorber (9), in order to take up ambient and/or waste heat.

4. Device for carrying out the process according to one of the claims 1 to 3 with a vacuum drying chamber (5) for receiving in batches materials containing water which are to be dried, with a water-ring vacuum pump (3) with water flowing through it, to generate negative pressure in the vacuum drying chamber (5) and to draw off the water vapour produced in it as well as to condense this vapour in the water flowing through the water-ring vacuum pump and with a water circuit for the water flowing through the water-ring vacuum pump (3), whereby at least one heat exchanger (6) transferring waste heat from the water to the materials to be dried is fitted into the circuit,
characterized in that
in the water circuit coupled to the front of the water-ring vacuum pump (3), another heat exchanger (4) is fitted, in which the water contained in the water circuit can be warmed with waste heat from the pump (3) and the pump drive (33) before the water flows into the water-ring vacuum pump (3), whereby the pump (3), the pump drive (33) and the heat exchanger (4) are mounted inside a common, heat insulated housing.

5. Device according to claim 4,
characterized in that
a rotary valve or gaseous ring vacuum pump (2) is connected as an additional fore-vacuum pump in series with the water-ring vacuum pump (3).

6. Device according to claim 4 or 5,
characterized in that
a pre-heater and additional heater device (75) is fitted in the water circuit behind the water-ring vacuum pump (3).

7. Device according to one of the claims 4 to 6,
characterized in that
the vacuum drying chamber (5) is also mounted within the common heat insulated housing (10).

8. Device according to one of the claims 4 to 7,
characterized in that
the additional heat exchanger (4) is an air-water heat exchanger.

9. Device according to one of the claims 4 to 8,
characterized in that
the vacuum drying chamber (5) envelops a conveyer tube (52) fitted with a rotatable endless screw (53) and that the heat exchanger transferring heat to the material fits around the conveyer tube (52) like a heat jacket.

10. Device according to claim 9,
characterized in that
the water flowing through the heat exchanger (6) and which flows in the opposite direction to the materials being conveyed through the conveyer tube (52), can be fed through the heat exchanger (6).

## Revendications

1. Procédé de séchage sous vide d'un matériau à sécher contenant de l'eau, au cours duquel l'eau est extraite du matériau sous forme de vapeur d'eau présente à pression réduite, laquelle est obtenue à l'aide d'une pompe à vide à anneau d'eau, la vapeur d'eau étant condensée dans le courant d'eau circulant dans la pompe et étant envoyée dans un circuit de circulation d'eau qui comprend au moins un échangeur de chaleur transférant de la chaleur de l'eau au matériau à sécher, caractérisé en ce que l'eau qui circule dans le circuit est envoyée, avant l'introduction dans la pompe à vide à anneau d'eau (3), via un échangeur de chaleur (4) transférant, à l'eau, la chaleur dégagée par la pompe (3) et par le moteur de la pompe (33).

2. Procédé de séchage sous vide selon la revendication 1, caractérisé en ce que la pompe à vide à anneau d'eau (3) fonctionne en tant que pompe à vide de premier stade, montée en série avec une pompe à vide à tiroir tournant ou à anneau de gaz branchée en amont.

3. Procédé de séchage sous vide selon la revendication 1 ou 2, caractérisé en ce que, par pulvérisation dans une enceinte de pulvérisation sous vide (8), d'une eau dérivée du circuit de circulation d'eau de la pompe à vide à anneau d'eau (3), on produit de la vapeur d'eau, et en ce que l'eau, avant la pulvérisation et/ou la vapeur produite par pulvérisation est/sont envoyée(s) dans un absorbeur (9) pour capter la chaleur ambiante et/ou perdue.

4. Installation pour la mise en oeuvre du procédé de séchage sous vide selon l'une quelconque des revendications 1 à 3, comprenant: une chambre de séchage sous vide (5) alimentée en une charge consistant en un matériau à sécher contenant de l'eau; une pompe à vide à anneau d'eau (3) à circulation d'eau pour l'obtention d'une pression réduite dans la chambre de séchage sous vide (5) et pour extraire la vapeur d'eau obtenue dans celle-ci et la condenser dans l'eau circulant dans la pompe à vide à anneau d'eau (3); et comprenant un circuit de circulation d'eau parcourant la pompe à vide à anneau d'eau, un échangeur de chaleur étant branché et transférant de la chaleur provenant de l'eau au matériau à sécher, caractérisée en ce qu'un échangeur de chaleur supplémentaire (4) est disposé en série dans le circuit de circulation d'eau avant la pompe à vide à anneau d'eau (3), dans lequel l'eau du circuit de circulation est réchauffable avant introduction dans la pompe à vide à anneau d'eau (3) par la chaleur dégagée par la pompe (3) et son moteur (33); et caractérisée en ce que la pompe (3), le moteur de pompe (33) et l'échangeur de chaleur (4) sont disposés dans une enceinte commune thermiquement isolée.

5. Installation selon la revendication 4, caractérisée en ce qu'une pompe à vide à tiroir tournant ou à anneau de gaz (2) est montée en amont en série, en tant que pompe à vide supplémentaire avec la pompe à vide à anneau d'eau (3).

6. Installation selon la revendication 4 ou 5, caractérisée en ce qu'un dispositif de préchauffage et chauffage supplémentaire (75) est disposé dans le circuit de circulation d'eau à la suite de la pompe à vide à anneau d'eau (3).

7. Installation selon l'une quelconque des revendications 4 à 6, caractérisée en ce que la chambre de séchage sous vide (5) est aussi disposée à l'intérieur de l'enceinte commune thermiquement isolée.

8. Installation selon l'une quelconque des revendications 4 à 7, caractérisée en ce que l'échangeur de chaleur supplémentaire (4) est un échangeur de chaleur du type air/eau.

9. Installation selon l'une quelconque des revendications 4 à 8, caractérisée en ce que l'enceinte de séchage sous vide (5) comprend un conduit transporteur (52) muni d'une vis (53) tournant dans celui-ci et en ce que l'échangeur de chaleur (6) cédant de la chaleur au matériau entoure le conduit transporteur sous la forme d'une jaquette chauffante.

10. Installation selon la revendication 9, caractérisée en ce que l'eau circulant dans l'échangeur de chaleur (6) peut être mis en circulation dans l'échangeur de chaleur (6), à contre-courant par rapport au sens de circulation du matériau alimentant le conduit transporteur (52).
